(19) Europäisches Patentamt
European Patent Office
Office européen des brevets

(11) EP 4 393 960 A1

(12) # EUROPEAN PATENT APPLICATION

(43) Date of publication:
**03.07.2024 Bulletin 2024/27**

(21) Application number: **22461658.1**

(22) Date of filing: **29.12.2022**

(51) International Patent Classification (IPC):
***C08B 11/12*** *(2006.01)*

(52) Cooperative Patent Classification (CPC):
**C08B 11/12**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(71) Applicant: **CMC Spolka Akcyjna**
**03-172 Warszawa (PL)**

(72) Inventors:
- **Pudzianowski, Janusz**
  **26-600 Radom (PL)**
- **Borycki, Jerzy**
  **26-600 Radom (PL)**
- **Lipka, Norbert**
  **26-600 Radom (PL)**
- **Pudzianowski, Marek**
  **26-600 Radom (PL)**
- **Mañturz, Dorota**
  **26-610 Pionki (PL)**
- **Pietrzyk, Barbara**
  **26-610 Pionki (PL)**

(74) Representative: **LDS Lazewski Depo & Partners**
**ul. Prosta 70**
**00-838 Warsaw (PL)**

(54) **METHOD FOR MANUFACTURING SODIUM CARBOXYMETHYL CELLULOSE**

(57) The present invention relates to a method for manufacturing sodium carboxymethyl cellulose, wherein the method comprises:
a) introducing ground cellulose raw material and solvent, which is a mixture of isopropanol and water, into the reactor;
b) while stirring at room temperature, adding sodium hydroxide and optionally water to the reactor so that the proportion of water to isopropanol in the resulting mixture is at least 10% by weight;
c) while stirring, adding monochloroacetic acid to the reactor;
d) while stirring, heating the reaction mixture to a temperature ranging from 55°C to 70°C, and then starting the circulation of air or inert gas, and solvent vapors formed in the reactor, and distilling the mixture with simultaneous condensation of said vapors using a cooler, and discharging the resulting condensate outside the reactor;
e) removal of a crude product from the reactor.

EP 4 393 960 A1

## Description

### Background of the invention

The present invention relates to a method for manufacturing carboxymethyl cellulose (CMC), particularly technical grade carboxymethyl cellulose in a form of sodium salt using waste cellulose.

Carboxymethyl cellulose (CMC) is a water-soluble anionic polymer derived from cellulose. It is a substance that increases viscosity of liquids, stabilizes suspensions of solid particles in liquids, and has hygroscopic properties. It poses no risk of mutagenicity and carcinogenicity, which is important from the point of view of its use in food and pharmaceutical products. It shows no toxicity to humans, and nutritional studies confirm that in metabolism and topical application it is, from a physiological point of view, incapable of causing pharmacological effects.

This raw material has good colloid-protective, thickening, binding and film-forming properties. Its application includes mainly household chemicals (powders, cleaning pastes), but it is also used in construction, foundry, ceramics, etc. CMC is also widely used in food industry. The compound shows surfactant activity, enhancing the action of emulsifiers used in a formulation, and counteracts the crystallization of ice and sugars. In addition, aqueous solutions of CMC have a gel structure, due to which they are used as viscosity modifiers. When used as aid in the production of washing powders, soaps, cleaning pastes, it acts as a protective colloid and does not allow dirt to redeposit on a fabric. It is used in the production of wallpaper adhesives, as a thickener for emulsion paints, and as aid for powder paints, cement mortars and painter's putties, in which it acts as a plasticizer and delays setting time. In ceramic bodies, it acts as a thickener, plasticizer and binding agent, and improves smoothness of enamels. It constitutes a binder that binds the coal dust during briquette production. It acts as a thickener in the preparation of sizings for weaving warps. It is also used to decrease the filtration and to stabilize the viscosity of drilling fluids.

That being so, carboxymethyl cellulose is used in the following market segments:

Technical grade carboxymethyl cellulose: paints and adhesives, building materials, including but not limited to acrylic plasters, mining, production of refractory materials and ceramics, paper industry, pelleting and briquetting, detergents (washing powders), mining and drilling industry (as drilling fluids component), construction industry - to maintain the flow of gypsum, cement, wallpaper adhesive and special purpose adhesives.

Purified carboxymethyl cellulose: in food industry (designated as E466) and used as a filler, emulsifier and anti-caking agent - stabilizer, carrier, thickener, filler - stabilization of emulsions e.g. in ice cream, in addition, it is used in pasteurized cream, icing, confectionery, homogenized cheese and cottage cheese, modified milk; in pharmaceutical formulation, 2-6% aqueous solutions of sodium salt are used as binders in wet granulation. With the use of polymers with different degrees of polymerization, it is possible to achieve different rates of release of the active substance. This results in drug forms having prolonged action. It is also added to tablets as disintegrant. In cosmetics: an excipient in injectable formulations (dexamethasone, for example). In ophthalmology: to produce artificial tears. In modern technology for the treatment of chronic wounds (Hydrofiber®), cationite in ion exchange chromatography for protein purification. In cosmetics: for hair styling, hand creams, toothpastes, laxatives, detergents.

The reactions that take place during the production of carboxymethyl cellulose are shown in the equations:

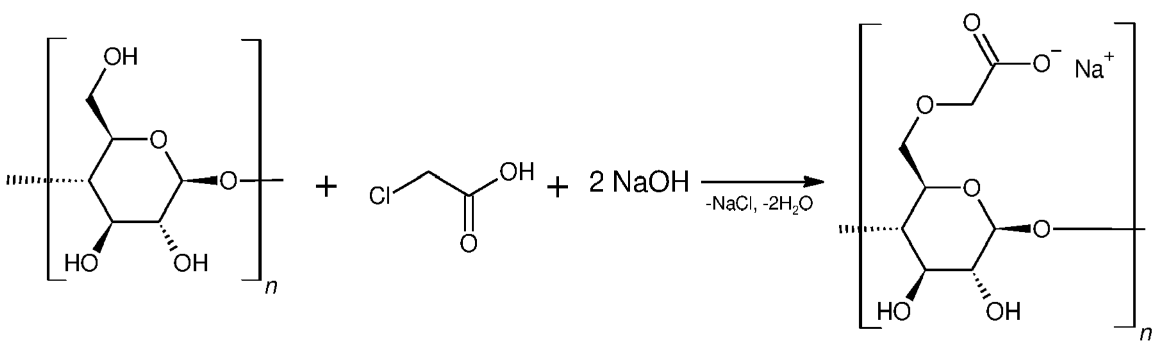


Known methods for manufacturing carboxymethyl cellulose (CMC) are summarized below.

a) Obtaining CMC by the Wiesbaden-Biebrich method

The initial step in obtaining CMC is an alkalization of cellulose carried out in steeping presses, into which cellulose (200-250 kg) is introduced. The press is then filled with soda lye having concentration of 18% or about 22%

at 18-20°C for 1-2 h. After this time, alkali cellulose should be pressed in hydraulic presses from excess NaOH up to 2.6-2.8 times its weight, which means that from 200 kg of cellulose 520-560 kg of alkali cellulose is obtained. Further grinding of alkali cellulose takes place in hammer mills, buhrstone mills, jaw crushers or drum crushers. Sometimes the grinding process for better effect is carried out in two stages with different apparatus. The alkali cellulose is then fed into a ribbon mixer with a heating and cooling jacket. During the loading of the alkali cellulose and later during the dispensing of dry sodium chloroacetate, the reaction temperature is maintained in the range of 18-20°C to obtain a homogeneous mixture. The etherification time is from 2.5 to 4.5 h at 40-60°C. The etherification is an exothermic reaction, so initially the temperature increases spontaneously, then a heating medium has to be introduced. After the reaction is completed, the product is dried and grinded. In this way, technical grade CMC contaminated with up to several tens of percent of sodium glycolate, sodium chloride and sodium carbonate is obtained. The pH of such a product is alkaline. To lower it, sodium bicarbonate or organic acids such as oxalic acid are added.

There are methods of obtaining CMC, in which grinded alkali cellulose (obtained as above) is further treated by the action of a mixture of monochloroacetic acid and a sodium salt of this acid. This mixture is obtained by mixing non-stoichiometric amounts of monochloroacetic acid with sodium carbonate in molar ratio of 2:0.5-2:0.9. The etherification reaction takes from 1 to 6 hours at 20°C to 60°C depending on the desired product range. Such a product still undergoes aging process for 6-180 hours at 20-50°C. The use of a mixture of acid and salt reduces the use of monochloroacetic acid and enables obtaining carboxymethyl cellulose with reduced byproduct content. This will give about 10% more CMC in the product compared to the first method. The above methods are periodic and two-step.

b) One-step method

Ground cellulose is introduced into a reactor containing NaOH at 60-70°C (finely ground cellulose allows for increased efficiency of the etherification agent). Alkalization of cellulose takes about 2 hours. After this time, a sodium salt of monochloroacetic acid is introduced. The etherification is carried out at 20-25°C for 1-2 hours, then the reactants are heated to 40-45°C and loaded into a stationary container, where completion of the etherification process takes place.

c) Liquid acid method

Compressed cellulose dust is ground again in a ribbon mixer, from which it is transported to a main reactor hopper in the form of a rotating tube of about 600 cm in length and 80 cm in diameter. The soda lye used in the alkalization of cellulose in this process is diluted (as in other methods) with water from 50% (a commercial form) to 35%. NaOH is dosed by spraying into a first part of the reactor at a rate of 102 kg per hour. An acid is dissolved in a separate tank to a concentration of 78%. It is dosed from the tank by spraying a further part of the reactor than the one sprayed with NaOH. Feed rate of $ClCH_2COO$ is 52 kg per hour. Optimal reaction temperature is 35-40°C. esidence time of cellulose in the reactor is 3 hours. Then the carboxymethyl cellulose is aged for a period of about 10 hours. The resulting carboxymethyl cellulose contains 41% water and is dried to a water content of 7%.

d) Solid sodium hydroxide method

Cellulose containing about 48% moisture is mixed with solid sodium hydroxide for 30 minutes, after which alkali cellulose is mixed with 38% aqueous solution of chloroacetic acid sodium salt for 1 hour and a temperature is maintained at 80°C for an extended period of time. Molar ratio of substrates used in this process is as follows: cellulose : NaOH : $ClCH_2COONa$ : $H_2O$ = 1: 0.57 : 1.6 : 9.

e) CMC production process using alcohol solvents

Ground cellulose is wetted with ethanol and then transformed into alkali cellulose by adding NaOH solution. Monochloroacetic acid sodium salt as a concentrated aqueous solution or more preferably in ethanol is added to the alkali cellulose. The system is heated and the reaction is controlled by the temperature with simultaneous discharge of ethanol-water azeotrope. The reaction proceeds for about 5 hours. This yields a sodium carboxymethyl cellulose with an active ingredient content of 75% (without solvent, about 50%), with the remainder being 8-10% of moisture in the form of water. Molar ratio of substrates used in this process is as follows: cellulose : NaOH : $ClCH_2COONa$ : ethanol = 1: 1.5 : 0.6 : 3.2.

In another variant, isopropanol was used as a solvent.

Ground high-viscosity cellulose, anhydrous isopropyl alcohol, and water are introduced into the edge mill. The edge mill is started and 47% sodium hydroxide solution is gradually added at 18°C. After 15 minutes, 99.7% sodium monochloroacetate is added to the edge mill and mixed with alkali cellulose for 3 hours. The obtained product in the form of granules is discharged into special tanks where a constant temperature of 60°C is maintained. The resulting

product forms a solution having a pH of 6-7 (in solvent-free methods: above 10).

Butanol can also be used as a solvent.

Soda lye is added to cellulose immersed in tertiary butanol and stirred for 30 minutes at 28-32°C. The mass is then cooled to 17°C and solid sodium chloroacetate is introduced. The reaction takes 4 hours at 50-55°C.

f) Preparation of carboxymethyl cellulose using an organic solvent

Powdered cellulose is added to a mixture of ethanol and benzene (other solvent can be used). Weight ratio of cellulose to solvent is equal to: 1 : 1.5. Into thus formed mixture a solution of NaOH and chloroacetic acid is introduced. The obtained product is centrifuged and neutralized with acetic acid in 70% ethanol and centrifuged a second time. The product is dried at 80°C. Molar ratio of substrates used in this process is as follows: cellulose : NaOH : $ClCH_2COOH$ : $H_2O$ = 1 : 2.2 : 1 : 20. It is worth noting that increasing the concentration of hydroxide increases the efficiency of the reaction. On the other hand, increasing the amount of water causes the product to swell, hindering the dissolution of the chloroacetic acid sodium salt in cellulose. A homogeneous product is obtained with increased alcohol concentration. Due to dissolution of the etherifying agent in alcohol and lye, concentration of the ether decreases, leading to a higher consumption of the agent.

Carboxymethyl cellulose obtained by the above methods is contaminated with $HOCH_2COONa$, NaCl, and NaOH. To eliminate these substances, technical grade CMC undergoes a purification process. This process involves washing the impurities out with alcohols or ketones, also using aqueous solutions of acidic or neutral sodium sulfate, or precipitating aqueous solutions of carboxymethyl cellulose with alcohol or ketone.

US4401813 discloses a method for preparing carboxymethyl cellulose in which the dispersant is an azeotropic mixture of isopropanol and water in a 2 : 1 to about 7.5 : 1 ratio to cellulose by weight, and where the reaction is carried out under an inert gas atmosphere and after its completion the solvent is removed under reduced pressure. Thus obtained carboxymethyl cellulose shows better stability in aqueous solutions containing calcium ions and is used in solutions used for drilling fluids.

Due to the high demand for carboxymethyl cellulose, there is a need to develop improved and more universal methods for manufacturing carboxymethyl cellulose, in which essentially the same process could be used for cellulose raw materials of different origins, especially wastetype cellulose raw materials.

This object is achieved by the present invention.

## Summary of the invention

The invention provides a method for manufacturing sodium carboxymethyl cellulose, wherein during the etherification of cellulose, circulation of air or inert gas, and solvent vapors formed in the reactor, and distillation of the mixture with simultaneous condensation of said vapors, and discharging of the resulting condensate outside the reactor is carried out. The method according to the invention generally does not require the use of an inert gas and makes it possible to obtain sodium carboxymethyl cellulose from a wide range of cellulose raw materials, particularly from waste cellulose, with the resulting product having a purity of more than 70%, a degree of substitution of 0.5 to 0.9 and a viscosity that can be controlled over a wide range. The use of circulation makes it possible to reduce the reaction time and the amount of solvent, which is almost entirely recovered and can be used in the next reaction. The method according to the invention is therefore energy-efficient and environmentally friendly, and does not generate cellulose fiber waste, which has been a huge problem until now.

The subject matter of the invention is defined in independent claim 1. Preferred variants of the method according to the invention are defined in dependent claims.

## Detailed description of the invention

The invention provides a method for manufacturing sodium carboxymethyl cellulose, wherein the method comprises:

a) introducing ground cellulose raw material and a solvent, which is a mixture of isopropanol and water, into the reactor;

b) while stirring at room temperature, adding sodium hydroxide and optionally water to the reactor so that the proportion of water to isopropanol in the resulting mixture is at least 10% by weight;

c) while stirring, adding monochloroacetic acid to the reactor;

d) while stirring, heating the reaction mixture to a temperature ranging from 55°C to 70°C, and then starting the circulation of air or inert gas, and solvent vapors formed in the reactor, and distilling the mixture with simultaneous condensation of said vapors using a cooler, and discharging the resulting condensate outside the reactor;

e) removal of a crude product from the reactor.

Preferably, in the method according to the invention, cellulose raw material is selected from a group comprising: cellulose, wood cellulose, waste cellulose, cotton, recycled cotton. Performing the method according to the invention using said raw materials provides highly valuable grades of carboxymethyl cellulose, which are difficult to obtain from standard raw materials.

Soluble products with satisfactory viscosity can be obtained by the method according to the invention only if appropriate amount of solvent (isopropanol-water) is used in relation to the amount of cellulose raw material used. The amount of solvent used in steps a) and b) depends on the type of cellulose raw material, its fineness and wetting ability. Cellulose grades that absorb solvent poorly, such as those in powder form, allow less solvent to be used than grades with a large specific surface area that absorb solvent strongly.

Preferably, in step a) a solvent containing at least 80% of isopropanol by weight in an amount of at least 7 $dm^3$ per each kilogram of cellulose raw material is used.

Preferably, the minimum amount of solvent in the cellulose alkalization step, i.e., step b) is 8 $dm^3$ per each kg of cellulose raw material. Preferably, the amount of solvent used in step b) is 8 to 12 $dm^3$ per each kg of cellulose raw material. Most preferably, the amount of solvent in step b) is 10 $dm^3$ per each kg of cellulose raw material.

Preferably, in step c), molar ratio of sodium hydroxide to monochloroacetic acid ranges from 2.0 to 2.4.

The place and method of dosing sodium hydroxide and/or monochloroacetic acid are not critical. No changes in product quality were observed with different methods of solvent introduction (nozzle spray, single line feed). This was also true for the alkalization process - a raw material in the form of aqueous solutions was fed through nozzles or dosed in solid form (flakes, powder, microgranules).

In the method according to the invention, no vacuum or overpressure is used at an initial step of the process, i.e. before loading the reactor with cellulose raw material and during the operation of wetting this raw material with a solvent in step a).

A degradation reaction takes place during syntheses carried out in an air atmosphere, the effect of which is a reduction of molecular weight of the obtained carboxymethyl cellulose. In one embodiment, in order to obtain a product with a higher molecular weight (higher viscosity), the method is carried out in an atmosphere of an inert gas, preferably argon or nitrogen. Furthermore, in syntheses carried out in an inert gas atmosphere, products with a slightly higher degree of substitution and higher viscosity are obtained.

Aqueous solutions of sodium carboxymethyl cellulose are alkaline. 2% solutions of products obtained using a stoichiometric amount of reactants (molar ratio of NaOH : MCA = 2 : 1) are slightly acidic. This indicates that some of the carboxyl groups in CMC are in an acidic form and not in a salt form. Therefore, it is necessary to use a slight excess of NaOH (2.5-3.5 mol%).

The use of aqueous solutions of NaOH and MCA in the syntheses causes that the viscosity of the resulting sodium carboxymethyl cellulose initially increases and then decreases. The optimum reaction time for obtaining the desired viscosity of the product and limiting the degradation of the resulting CMC was determined. In a reaction carried out on a scale of about 600 g of cellulose raw material, the preferable reaction time calculated from the completion of the addition of monochloroacetic acid in step c) to the completion of the reaction in step d) ranges from 90 to 120 minutes. After this time, there is no decrease in the viscosity of the obtained CMC.

In terms of molar ratio of the reactants used - per 1 mole of anhydroglucose units (AGUs) of cellulose raw material, there are preferably 1.55 to 2.4 moles of sodium hydroxide and 0.75 to 1.17 moles of monochloroacetic acid, respectively. The use of a smaller amount of NaOH relative to AGU yields products with a lower degree of substitution and higher purity, which can be used in the production of washing agents.

The process of cellulose wetting, i.e. step a), is carried out at room temperature. In the alkalization step, i.e. step b), NaOH is introduced into the reactor charged with cellulose suspension, which causes a slight increase in temperature (e.g., from 18-22°C to 28-32°C), followed by a decrease thereof. There is no need to adjust the alkalization temperature, as the reaction temperature in this step does not exceed 35°C.

After the addition of monochloroacetic acid in step c), the etherification process is started, i.e. step d), which is carried out with a circulation of air or inert gas, and solvent vapors formed in the reactor, and distillation of the mixture with simultaneous condensation of said vapors using a cooler, and discharging the resulting condensate outside the reactor.

Preferably, step d) is carried out at 60°C. In the final reaction phase, in order to evaporate the residual solvent more quickly, the temperature of the reaction can be increased slightly, e.g. by about 10°C.

After completing the etherification step, the crude product in the form of sodium carboxymethyl cellulose is removed from the reactor in step e).

To obtain products with low viscosity (25-30 mPa·s for 2% solutions) by the method according to the invention, the solvent further comprises perhydrol (30% hydrogen peroxide solution). As this has also been shown in laboratory-scale studies, this raw material causes very rapid degradation of cellulose/carboxymethyl cellulose.

A factor of fundamental importance in the method according to the invention is water content in the reaction medium. The presence of a certain amount of water is necessary to obtain water-soluble products. While performing the reaction with isopropanol initially distills an azeotrope (which accounts for about 75-80% of the total amount of distilled solvent), followed by a mixture containing more water than in the azeotrope. The distilled azeotrope is used directly for subsequent syntheses, while the remaining amount of distilled solvent with either a density greater than 0.815 g/cm$^3$ (at 25°C) or a refractive index less than 1.277 (at 20°C) can be regenerated (e.g., by rectification).

It is thought that evaporation of the solvent will increase the concentration of reactants in the reaction medium, and consequently increase the reaction rate. Hence, the syntheses of sodium carboxymethyl cellulose were carried out in different variants, but directed at reducing the amount of water in the reaction medium.

DEFINITIONS

Unless stated otherwise herein, the concentrations of reactants in percentages refer to the concentrations of these reactants by weight.

In the present description, the term room temperature means a temperature ranging from 20°C to 35°C.

The embodiments and examples of the present invention are to be considered in all respects merely illustrative and not limiting. Thus, the present invention may be implemented in other specified variations without departing from its subject matter and claimed scope, which is limited only by the appended claims.

## Examples

RAW MATERIALS

1. In the following examples, the following types of cellulose raw material were tested:

    a) Derivat NC spruce cellulose (Borregaard ChemCell, Norway);

    b) Stendal ECF pine-spruce cellulose (40-70% pine and 30-60% spruce) (Mercer, c/o Stendal Pulp Holdings, Germany);

    c) Supra SK Sb beech cellulose (Mondi SCP, producer: Slovakia) and Svilosa (Svilosa AD, producer: Svilocell EAD, Bulgaria);

    d) Pontevedra eucalyptus cellulose (ENCE, Spain);

    e) Recycled cotton - two grades of waste cotton fabric (flannel and T-shirt) from the process of sewing children's clothes.

    All cellulose grades were ground in high-performance technical pulverizers (Pallmann Ultra-Granulator type P9 5-1). Sieve analysis - at least 95% of particles below 250 μm.

2. Chloroacetic acid: 80% HP (PCC PCSA, Poland) or 100% technical, flakes (PCC PCSA, Poland)

3. Propan-2-ol, analytical grade, min. 99.7% (POCh Basic)

4. Ethanol 96% (Polmos) or denatured 96% (Line EtOH Line-EtOH synt B)

5. Sodium chloroacetate for synthesis (Merck KGaA)

6. Nitric acid 65%, analytical grade - Basic (POCh Basic)

7. Sodium hydroxide: microgranules, purity min. 98% (POCh), granules, min. 99.5% (Standard Sp. z o.o.).

8. Sulfuric acid 95%, analytical grade (Chempur)

TESTING METHODS OF RESEARCH AND ANALYSIS

Testing of CMC purity

By the content of the active substance it is understood the amount of pure CMC in the test sample expressed in percentage. After drying (3 hours, 105°C), the CMC sample was washed three times with portions of 80% ethanol, 150 mL each, to 60-65°C, filtered off, washed with

50 mL of 96% ethanol and dried to constant weight. The purity of CMC was calculated according to the formula:

$$S_C = (A \cdot 10{,}000)/B \cdot (100 - C)$$

where : A - mass of a dried residue [g]

B - mass of a sample used for testing [g]

C - moisture of an original sample [%]

Testing of the degree of substitution (PS)

The degree of substitution determines how many hydrogen atoms of cellulose hydroxyl groups, on average for one mer, have been substituted with $-CH_2COONa$ group. The maximum degree of substitution is 3, which is the number of hydroxyl groups in one mer of cellulose. The testing consisted of converting the sodium salt into the acidic form with nitric acid, washing off the impurities with hot 80% ethanol and titrating with 0.4 N NaOH against phenolphthalein.

Calculation of milliequivalent of acid consumed per 1 g of the sample - A

$$A = (B \cdot C - D \cdot E)/F$$

where: B - amount of NaOH added [mL]

C - normality of NaOH = 0.4 N

D - amount of HCl required for titration of excess NaOH

E - normality of HCl = 0.4 N

F - CMC sample weight [g].

Calculating the degree of substitution - DS

$$DS = 0.162 \cdot A\,(1 - 0.0584/A)$$

Testing of viscosity

Dynamic viscosity of a 2% solution of carboxymethyl cellulose was tested with a Höppler viscometer according to PN EN ISO 12058-1: 2005.

EQUIPMENT

The syntheses were carried out in a cylinder-shaped reactor made of stainless steel. It had a diameter of 400 mm, a length of 500 mm and a working volume of 45 $dm^3$. It was equipped with three reagent tanks (solvent, NaOH, monochloroacetic acid) from which substrates could be introduced into the reactor via nozzles. The reactor was equipped with a circulation system containing a duct fan, located between the reactor and the condenser. Air saturated with solvent vapors was directed to a cooling system consisting of two double-jacketed coolers connected in series. The condensing solvent was collected in a 6 $dm^3$ flask and periodically removed to determine the amount of the evaporated solvent. It was found that an isopropanol-water azeotrope, containing about 10% by volume of water, was distilled from the reactor.

Such a configuration enabled obtaining a solvent that, without purification operations, could be used in subsequent syntheses.

**Example 1. Synthesis of sodium carboxymethyl cellulose using aqueous solutions of NaOH and monochloroacetic acid**

Ground cellulose was introduced into the reactor, followed by the addition of isopropanol. Both high-purity (99.7%) and regenerated (rectified) solvent were used. After 30 min of stirring at room temperature, NaOH solution was added. After another 30 min, the MCA solution was added, and heating and circulation were turned on. Vapor-saturated air was passed through the condensing system. The reaction was carried out in the three variants shown in Table 1 with periodic sampling for viscosity analysis. After the reaction was completed, viscosity, degree of substitution (DS) and purity of the resulting product were measured.

SAMPLING

Sampling from the reactor followed the times shown in Table 1. The collected samples were filled with about 150 mL of isopropanol and neutralized in the presence of phenolphthalein with a 30% citric acid solution. For analytical purposes, after the reaction was completed, the reactor contents were poured into a 20 liter container. The product was filtered off, washed with isopropanol, weighed and placed in a dryer. The product was dried at 105°C for 3 hours and weighed after cooling. Table 1 shows the amounts of reactants used in the synthesis and the properties of the products obtained in the experiments numbered consecutively.

Table 1

| No. | Raw materials (type, quantity, molar ratio) | | | Reaction time | Viscosity | DS | Purity (%) |
|---|---|---|---|---|---|---|---|
| 1 | Supra SK<br>Isopropanol (99.7%)<br>50% NaOH<br>80% MCA | 600 g<br>4200 mL<br>681.4 g<br>503.2 g | 1<br><br>2.3<br>1.15 | 60 min<br>90 min<br>150 min<br>180 min | 225 mPas<br>204 mPas<br>198 mPas<br>178 mPas | 0.53 | 78.8 |
| 2 | Cotton<br>Isopropanol (99.7%)<br>50% NaOH<br>80% MCA | 600 g<br>4200 mL<br>681.4 g<br>503.2 g | 1<br><br>2.3<br>1.15 | 40 min<br>90 min<br>120 min | 11,265 mPas<br>5378 mPas<br>7179 mPas | 0.87 | 74.1 |
| 3 | Stendal O3V1<br>Isopropanol (99.7%)<br>50% NaOH<br>80% MCA | 600 g<br>5000 mL<br>687.4 g<br>498.5 g | 1<br><br>2.32<br>1.14 | 40 min<br>60 min<br>75 min<br>90 min<br>105 min | 154 mPas<br>189 mPas<br>323 mPas<br>289 mPas<br>468 mPas | 0.86 | 80.6 |

**Example 2. Synthesis of sodium carboxymethyl cellulose using solid NaOH and monochloroacetic acid solution**

The reactions were carried out analogously to Example 1, with the only exception that to reduce the amount of water in the reaction medium, solid (microgranules) sodium hydroxide was used. Table 2 shows the amounts of reactants used in the synthesis and the properties of the obtained products in the experiments numbered consecutively. The term isopropanol (rec.) denotes the solvent recovered in the previous reaction cycle, which is a mixture of isopropanol and water with isopropanol content of at least 80%.

Table 2

| No. | Raw materials (type, quantity, molar ratio) | | | Reaction time | Viscosity | DS | Purity (%) |
|---|---|---|---|---|---|---|---|
| 4 | Supra SK<br>Isopropanol (rec.)<br>NaOH<br>80% MCA | 1200 g<br>14,000 mL | 1<br><br>2.10<br>1.03 | 60 min<br>120 min<br>180 min | 235 mPas<br>242 mPas<br>239 mPas | 0.78 | 83.5 |

(continued)

| No. | Raw materials (type, quantity, molar ratio) | | | Reaction time | Viscosity | DS | Purity (%) |
|---|---|---|---|---|---|---|---|
| 5 | Pontavedra<br>Isopropanol (rec.)<br>NaOH<br>80% MCA | 1200 g<br>14,000 mL<br>622 g<br>901 g | 1<br><br>2.10<br>1.03 | 60 min<br>120 min<br>180 min<br>240 min<br>300 min | 267 mPas<br>240 mPas<br>244 mPas<br>257 mPas<br>377 mPas | 0.92 | 77.5 |
| 6 | Svilosa<br>Isopropanol (rec.)<br>NaOH<br>80% MCA | 1200 g<br>12,000 mL<br>622 g<br>901 g | 1<br><br>2.10<br>1.03 | 60 min<br>120 min<br>180 min<br>240 min<br>270 min | 146 mPas<br>179 mPas<br>145 mPas<br>193 mPas<br>178 mPas | 0.85 | 78.0 |
| 7 | Stendal<br>Isopropanol (rec.)<br>NaOH<br>80% MCA | 1200 g<br>12,000 mL<br>622 g<br>901 g | 1<br><br>2.10<br>1.03 | 60 min<br>120 min<br>180 min<br>240 min<br>270 min | 166 mPas<br>182 mPas<br>178 mPas<br>141 mPas<br>197 mPas | 0.79 | 77.5 |

**Example 3. Synthesis of sodium carboxymethyl cellulose using solid NaOH and solid monochloroacetic acid**

Ground cellulose was introduced into the reactor, and isopropanol was added. The solvent distilled from the reactor during the previous synthesis was used. For each synthesis, the water content of the alcohol used was determined from the measured density. The solvent was poured directly into the reactor. After 30 min of stirring at room temperature, NaOH microgranules were added. After another 30 min, MCA flakes were added. Heating was turned on, and after 30 min circulation was turned on, i.e. solvent distillation process began. Sampling from the reactor occurred after the time shown in the table below (counting from completion of addition of MCA). The collected samples were filled with about 150 mL of isopropanol and neutralized in the presence of phenolphthalein with 30% citric acid solution. After the reaction was completed, the contents of the reactor were poured into a 20 liter container. The product was weighed and its moisture content was determined.

In order to obtain a product characterized by a lower viscosity, a 30% solution of hydrogen peroxide was added together with isopropanol. Table 3 shows the amounts of reagents used and the properties of the product obtained in the experiments numbered consecutively. The term isopropanol (rec.) means the solvent recovered in the previous reaction cycle, which is a mixture of isopropanol and water with isopropanol content of at least 80%.

Table 3

| No. | Raw materials (type, quantity, molar ratio) | | | Reaction time | Viscosity | DS | Purity (%) |
|---|---|---|---|---|---|---|---|
| 8 | Supra SK<br>Isopropanol (rec.)<br>NaOH (granules)<br>MCA | 1200 g<br>10,000 mL<br>459.3 g<br>525 g | 1<br><br>1.55<br>0.75 | 60 min<br>120 min<br>180 min<br>240 min | 207 mPas<br>177 mPas<br>187 mPas<br>189 mPas | 0.77 | 80.6 |
| 9 | Stendal<br>Isopropanol (rec.)<br>NaOH<br>MCA | 1200 g<br>12,000 mL<br>622 g<br>721 g | 1<br><br>2.10<br>1.03 | 60 min<br>120 min<br>180 min | 144 mPas<br>141 mPas<br>151 mPas | 0.77 | 77.9 |
| 10 | Supra SK<br>Isopropanol (rec.)<br>NaOH<br>MCA | 1200 g<br>12,000 mL<br>622 g<br>721 g | 1<br><br>1.55<br>0.75 | 60 min<br>120 min<br>180 min | 136 mPas<br>142 mPas<br>170 mPas | 0.72 | 83.2 |

(continued)

| No. | Raw materials (type, quantity, molar ratio) | | | Reaction time | Viscosity | DS | Purity (%) |
|---|---|---|---|---|---|---|---|
| 11 | Stendal<br>Isopropanol (rec.)<br>NaOH<br>MCA<br>$H_2O_2$ (30%) | 1200 g<br>12,000 mL<br>622 g<br>721 g<br>50 mL | 1<br><br>2.36<br>1.14 | 60 min<br>120 min<br>180 min<br>240 min | 25.3 mPas<br>28.2 mPas<br>26.2 mPas<br>26.5 mPas | 0.67 | 72.2 |
| 12 | Supra SK<br>Isopropanol (rec.)<br>NaOH<br>MCA<br>Atmosphere - argon | 1200 g<br>12,000 mL<br>622 g<br>721 g | 1<br><br>2.10<br>1.03 | 60 min<br>120 min<br>180 min<br>270 min | 124 mPas<br>123 mPas<br>108 mPas<br>228 mPas | 0.84 | 77.2 |

References

[1]. Rahman M.S., Hasan M.S., Nitai A.S., Nam S., Karmakar A.K., Ahsan M.S., Shiddiky M.J.A., Ahmed M.B. Recent Developments of Carboxymethyl Cellulose. Polymers 2021, 13, 1345.
[2]. Stigsson V., Wilson D.I. and Germgird U. 2004. Production Variance in Purified Carboxymethyl Cellulose (CMC) Manufacture, Dev. Chem. Eng. Mineral Process., 12(1/2), 217.

## Claims

**1.** A method for manufacturing sodium carboxymethyl cellulose, wherein the method comprises:

a) introducing ground cellulose raw material and solvent, which is a mixture of isopropanol and water, into the reactor;
b) while stirring at room temperature, adding sodium hydroxide and optionally water to the reactor so that the proportion of water to isopropanol in the resulting mixture is at least 10% by weight;
c) while stirring, adding monochloroacetic acid to the reactor;
d) while stirring, heating the reaction mixture to a temperature ranging from 55°C to 70°C, and then starting the circulation of air or inert gas, and solvent vapors formed in the reactor, and distilling the mixture with simultaneous condensation of said vapors using a cooler, and discharging the resulting condensate outside the reactor;
e) removal of a crude product from the reactor.

**2.** The method according to claim 1, wherein the cellulose raw material is selected from a group comprising: cellulose, wood cellulose, waste cellulose, cotton, recycled cotton.

**3.** The method according to any of the preceding claims, wherein in step a) a solvent containing at least 80% by weight of isopropanol in an amount of at least 7 $dm^3$ per each kilogram of cellulose raw material is used.

**4.** The method according to any of the preceding claims, wherein the minimum amount of solvent in step b) is 8 $dm^3$ per each kg of cellulose raw material, preferably 8 to 12 $dm^3$, most preferably 10 $dm^3$.

**5.** The method according to any of the preceding claims, wherein in step c) molar ratio of sodium hydroxide to monochloroacetic acid ranges from 2.0 to 2.4.

**6.** The method according to any of the preceding claims, wherein the inert gas is argon or nitrogen.

**7.** The method according to any of the preceding claims, wherein the reaction time calculated from the completion of the addition of monochloroacetic acid in step c) to the completion of the reaction in step d) ranges from 90 to 120

minutes.

8. The method according to any of the preceding claims, wherein the step d) is carried out at 60°C.

9. The method according to any of the preceding claims, wherein the solvent further comprises hydrogen peroxide.

Europäisches Patentamt
European Patent Office
Office européen des brevets

# EUROPEAN SEARCH REPORT

Application Number
EP 22 46 1658

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | GB 2 111 058 A (NL INDUSTRIES INC) 29 June 1983 (1983-06-29) * claim 3; example 1A * ----- | 1-9 | INV. C08B11/12 |

| TECHNICAL FIELDS SEARCHED (IPC) |
|---|
| C08B |

The present search report has been drawn up for all claims

1

| Place of search | Date of completion of the search | Examiner |
|---|---|---|
| Munich | 25 May 2023 | Friedrich, Christof |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons
..........................................................................
& : member of the same patent family, corresponding document

EPO FORM 1503 03.82 (P04C01)

## ANNEX TO THE EUROPEAN SEARCH REPORT ON EUROPEAN PATENT APPLICATION NO.

EP 22 46 1658

This annex lists the patent family members relating to the patent documents cited in the above-mentioned European search report. The members are as contained in the European Patent Office EDP file on
The European Patent Office is in no way liable for these particulars which are merely given for the purpose of information.

25-05-2023

| Patent document cited in search report | Publication date | Patent family member(s) | Publication date |
|---|---|---|---|
| GB 2111058 A | 29-06-1983 | BR 8207090 A | 11-10-1983 |
| | | CA 1177827 A | 13-11-1984 |
| | | DE 3245794 A1 | 23-06-1983 |
| | | ES 8404378 A1 | 16-04-1984 |
| | | FR 2518551 A1 | 24-06-1983 |
| | | GB 2111058 A | 29-06-1983 |
| | | IT 1155077 B | 21-01-1987 |
| | | MX 159764 A | 17-08-1989 |
| | | NL 8203929 A | 01-07-1983 |
| | | NO 159020 B | 15-08-1988 |
| | | SG 26286 G | 27-03-1987 |
| | | US 4401813 A | 30-08-1983 |

EPO FORM P0459

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- US 4401813 A


### Non-patent literature cited in the description


- **RAHMAN M.S ; HASAN M.S. ; NITAI A.S ; NAM S. ; KARMAKAR A.K. ; AHSAN M.S ; SHIDDIKY M.J.A. ; AHMED M.B.** Recent Developments of Carboxymethyl Cellulose. *Polymers,* 2021, vol. 13, 1345
- **STIGSSON V ; WILSON D.I. ; GERMGIRD U.** Production Variance in Purified Carboxymethyl Cellulose (CMC) Manufacture. *Dev. Chem. Eng. Mineral Process.,* 2004, vol. 12 (1,2), 217